# EUROPÄISCHE PATENTANMELDUNG

(11) **EP 1 772 266 A2**
(43) Veröffentlichungstag der Anmeldung: **11.04.2007**
(21) Anmeldenummer: 06405428.1
(22) Anmeldetag: 06.10.2006
(51) Int. Cl.: B41F 33/00, G01L 5/00

(54) **Verfahren und Vorrichtung zur Messung einer zwischen zwei Rotationskörpern gebildeten Nipbreite**

(30) Priorität: 10.10.2005 DE 102005048367
(71) Anmelder: Maschinenfabrik Wifag, 3001 Bern (CH)
(72) Erfinder: Munz, Curt, 3510 Konolfingen (CH); Schaerer, Heinz, 3400 Burgdorf (CH)

(57) **Zusammenfassung**

Die Erfindung betrifft ein Verfahren zur Ermittlung einer zwischen zwei Rotationskörpern gebildeten Nipbreite bei Rotationsdruckmaschinen, wobei die sich in Umfangsrichtung erstreckende Breite des Nips während eines Durchlaufs eines Umfangspunkts durch den Nip ermittelt wird.

Ferner betrifft die Erfindung eine Anordnung zur Ermittlung einer sich in Umfangsrichtung erstreckenden Breite eines zwischen zwei Rotationskörpern gebildeten Nips, umfassend:
a) einen Sensor, der an einer Umfangsfläche eines der Rotationskörper angeordnet ist,
b) eine Zähleinheit, die wenigstens einen fortschreitenden Wert ausgeben kann,
c) eine Verarbeitungseinheit, an die der Sensor und die Zähleinheit gekoppelt sind,
d) wobei die Verarbeitungseinheit anhand eines von dem Sensor ausgegebenen Werts eine Grenze eines Intervalls aus dem fortschreitenden Wert bilden kann.

## Beschreibung

Die Erfindung betrifft ein Verfahren und eine Vorrichtung zum Messen einer Breite eines Nips, insbesondere bei aufeinander abrollenden Zylindern oder Walzen, wie sie in Rotationsdruckmaschinen vorzugsweise in Offsetdruckmaschinen eingesetzt werden.

Aus dem Stand der Technik sind verschiedene Verfahren und Einrichtungen bekannt, mit denen die Breite eines Nips ermittelbar ist. Beispielsweise offenbart die DE 44 27 967 A1 ein Verfahren und Einrichtungen zur Zylinderdruckeinstellung zwischen farbführenden Zylindern einer Druckmaschine. Hierzu sind um einen Formzylinder ortfeste optoelektronische Sensoren angeordnet, die die Oberfläche des Formzylinders abtasten können. An den Formzylinder können Farb- und Feuchtauftragswalzen an- und abgestellt werden. Zur Messung der Nip-Breite werden die abgestellten Farb- und Feuchtwalzen gleichmäßig mit einer Farbe oder einem Feuchtmittel benetzt. Anschließend werden die Farb- und Feuchtwalzen auf den stillstehenden Formzylinder an- und abgestellt, so dass je nach Anpressdruck ein mehr oder weniger breiter Streifen einer Farbe oder eines Feuchtmittels auf dem Formzylinder verbleibt. Der Formzylinder wird nun solange gedreht, bis die Streifen an den optoelektronischen Sensoren vorbei geführt werden. Die optoelektronischen Sensoren messen zusammen mit einem Drehwinkelgeber die Bereite des Streifens. Eine Messung der Nip-Breite während die Farb- und Feuchtwalzen an den Formzylinder angestellt sind und die Walzen und Zylinder rotieren, wie es beim Druckbetrieb des Zylinders der Fall ist, ist mit der genannten Vorrichtung nicht möglich.

Aus der DE 103 21 359 B3 ist eine Sensoranordnung an einem Rotationskörper bekannt, die in einer Anstelllage des Rotationskörpers mit einem zweiten Rotationskörper direkt oder indirekt wechselwirkt und eine vom Anstelldruck bzw. einer Anstellkraft abhängige Wirkung erfährt. Die Sensoranordnung weist hierfür eine sich in Umfangsrichtung des Rotationskörpers erstreckende Druckmittelsäule auf, die mit einem Drucksensor gekoppelt ist, über den der Druck in der Druckmittelsäule ermittelt werden kann.

Die DE 103 21 360 B3 offenbart eine Anordnung eines Sensors an einem Rotationskörper, bei der der Sensor in einer an der Umfangsfläche angeordneten Vertiefung platziert ist. Diese zur Umfangsfläche weisende Fläche des Sensors oder ein an der zur Umfangsfläche weisenden Fläche des Sensors befestigtes Abdeckelement schließt mit der Kontur der Umfangsfläche ebenbündig ab. Dadurch kann eine Belastung des Sensors in Umfangsrichtung zum Beispiel durch Walken vermieden werden, da der Sensor lediglich Belastungen in radialer Richtung des Zylinders erfährt.

Die DE 103 29 430 A1 zeigt eine Walze mit einem integrierten Drucksensor, der sich streifenförmig über einen Großteil des Umfangs der Walze erstreckt. Der Sensor besteht aus einem anorganischen piezoelektischen Material. Da mit dem streifenförmigen Piezoelement der Anpressdruck einer angestellten Walze über einen weiten Bereich des Umfangs gemessen werden kann, kann der Druck jeweils bei unterschiedlichen Phasen von Schwingungen der Walze erfasst werden. Dadurch ist es möglich, aus den Messwerten einen quasi-stationären und einen oszillierenden Anteil zu ermitteln, um den Anpressdruck zu variieren oder den Schwingungen mit entsprechenden Gegenbewegungen entgegenzuwirken.

Aus der DD 233 653 A1 werden die durch das Anstellen von zylindererzeugten Druckspannungen bei stillstehender oder laufender Druckmaschine von einem streifenförmig um den Umfang des Zylinders und jeweils ganz oder teilweise über dessen Länge hinweg oder matrixförmig auf der Zylinderoberfläche angeordneten polymeren Sensor insbesondere einer Elektretfolie ermittelt.

Eine Aufgabe der Erfindung ist es, ein Verfahren und eine Anordnung bereit zu stellen, bei dem eine sich in Umfangsrichtung erstreckende Breite eines zwischen einem Rotationskörper und einem anderen Rotationskörper gebildeten Nips effizient ermittelt werden kann.

Diese Aufgabe wird gelöst durch die unabhängigen Ansprüche. Vorteilhafte Weiterentwicklungen ergeben sich aus den abhängigen Ansprüchen.

Die Erfindung betrifft die Messung einer sich in Umfangsrichtung erstreckenden Breite eines Nips, der bei angestellten Rotationskörpern, insbesondere Walzen oder Zylindern einer Druckmaschine, vorzugsweise Rotationsdruckmaschine gebildet wird. Als Nip wird im Allgemeinen die Kontaktfläche bezeichnet, die sich bei aneinander angestellten, insbesondere in etwa zylindrischen Rotationskörpern bildet. Bei den Rotationskörpern kann es sich beispielsweise um Farbwalzen oder Feuchtwalzen insbesondere eines Farb- oder Feuchtwerks, oder um Formzylinder oder Übertragungszylinder insbesondere eines Druckwerkes handeln. Ferner kann wenigstens einer der Rotationskörper an seiner Umfangsfläche einen Belag aufweisen. Ein Formzylinder kann zum Beispiel an seiner Umfangsfläche mit einer Druckform, insbesondere einer aufgezogenen Druckplatte versehen sein. Ein Übertragungszylinder kann an seiner Umfangsfläche einen Belag, insbesondere in der Gestalt eines Gummi- oder Kunststoffbelags, wie z. B. ein aufgezogenes Gummituch aufweisen.

Der Erfindung liegt die Idee zugrunde, während die Rotationskörper angestellt sind und insbesondere während des Betriebs, wie zum Beispiel im Anlauf- oder Druckbetrieb der Rotationskörper bzw. der Druckmaschine, die Breite des Nips zu ermitteln, indem ein Intervall, insbesondere ein Zeitintervall oder ein Wegintervall oder ein Drehwinkelintervall ermittelt wird, während ein Umfangspunkt, der an dem Umfang eines der Rotationskörper angeordnet ist, den Nip durchläuft. Besonders bevorzugt ist an dem Punkt, der den Nip durchläuft, ein Sensor angeordnet, mit dem ermittelt werden kann, wenn der Punkt oder der Sensor aus einem Abschnitt außerhalb des Nips in den Nip und aus dem Nip in einen Abschnitt außerhalb des Nips bewegt wird. Solch ein Sensor kann beispielsweise eine Fotozelle, ein Annäherungssensor oder vorzugsweise ein Drucksensor sein. Mit diesen Sensoren können Grenzen des Intervalls in Abhängigkeit von dem für den jeweiligen Sensor maßgebende Messgröße ermittelt werden. Beispielsweise werden bei einem Drucksensor die Grenzen des Intervalls in Abhängigkeit eines Anpressdrucks ermittelt, den die den Nip bildenden Rotationskörper aufeinander ausüben.

Der Sensor mit dem die Grenzen des Intervalls ermittelt werden können, sitzt an der Umfangsfläche des Rotationsköpers, insbesondere auf oder unterhalb dessen Oberfläche. Der Sensor kann in die Oberfläche eingegossen oder eingebettet sein. Beispielsweise kann der Sensor in einer Vertiefung, wie zum Beispiel einer Tasche oder einer Nut angeordnet sein, wobei sich die Oberfläche des Sensors, die radial von dem Rotationskörper wegweist oder ein über dieser Oberfläche des Sensors angeordnetes Element, das die Tasche oder die Nut im wesentlichen abdeckt, bündig mit der Umfangsfläche des übrigen Rotationskörpers sein. Zum Beispiel kann der Sensor in der Tasche mit einem Harz umgossen sein, dessen vom Rotationskörper wegweisende Oberfläche bündig mit der Oberfläche des übrigen Rotationsköpers angepasst ist. Der Sensor kann eine geringe Dicke im Vergleich zu seiner flächenmäßigen Ausdehnung aufweisen und auf die Oberfläche beispielsweise aufgeklebt und/oder in diese eingebettet sein.

In einer vorteilhaften Weiterbildung kann der Sensor auf oder in oder unter einem Belag für einen Zylinder oder eine Walze, insbesondere einem Gummituch oder einer Druckplatte angeordnet sein. Beispielsweise kann der Sensor eingegossen oder einvulkanisiert sein. Der Sensor kann zwischen einem Walzenbelag oder dem Gummituch oder der Druckplatte und dem Rotationskörper angeordnet sein.

Beispielsweise ist es möglich den Sensor an dem Belag auf einer radial von dem Rotationskörper wegweisenden Oberfläche oder unter dieser Oberfläche, insbesondere an der zum Rotationskörper hinweisenden Oberfläche des Belags anzuordnen. Der Sensor kann sich zwischen Belag, insbesondere Druckplatte und Rotationskörper befinden. Der Sensor kann an dem Belag oder dem Rotationskörper befestigt sein.

Der Sensor nimmt vorzugsweise so eine axiale Position entlang der Längsachse des Rotationskörpers ein, dass das Druckbild durch abweichende Festigkeitseigenschaften an der Stelle an der der Sensor angeordnet ist im Vergleich zu einer Stelle an der kein Sensor angeordnet ist, nicht beeinflusst wird. Beispielsweise kann der Sensor bei einem Rotationskörper der eine Druckplatte aufweist oder bei einem mit diesem Rotationskörper zusammenwirkenden insbesondere angestellten Rotationskörper so eine axiale Position einnehmen, so dass der Sensor neben einem Satzspiegel oder in einem druckfreien Bereich auch innerhalb des Satzspiegels angeordnet ist.

Der mindestens eine an dem Rotationskörper angeordnete Sensor rotiert bei Drehung mit dem Rotationskörper in Umfangsrichtung. Wenn der Rotationskörper, der den Sensor aufweist auf einem anderen Rotationskörper abrollt, insbesondere diesen berührt, durchläuft der Sensor bei jeder Umdrehung den dadurch gebildeten Nip einmal. Bei mehreren an den Rotationskörper mit dem Nip angestellten Rotationskörpern, durchläuft der Sensor entsprechend mehrere Nips bei einer Umdrehung. Beispielsweise können an den Rotationskörper, der den Sensor aufweist bei mehreren angestellten Rotationskörpern zwei, drei, vier oder mehr Rotationskörper angestellt werden oder sein.

Die Erfindung geht davon aus, dass die angestellten Walzen aufeinander im Bereich des Nips einen Anpressdruck ausüben. Vorteilhaft wird das Intervall von einem Ereignis bei dem der Anpressdruck einen Schwellwert erreicht oder überschreitet bis zu einem Ereignis bei dem der Anpressdruck einen Schwellwert unterschreitet, bestimmt. Besonders vorteilhaft hierfür ist die Verwendung eines Drucksensors, der ein vom Anpressdruck abhängiges Signal ausgibt, wodurch der Anpressdruck ermittelt werden kann. Dies kann beispielsweise ein dem Anpressdruck proportionales Signal sein, aus dem insbesondere die Höhe des Anpressdrucks ermittelt werden kann. Dieses Signal kann in einem weiteren Schritt, vorzugsweise in einer Umwandlungseinheit oder einem Schwellwertdetektor mit einem Schwellwert verglichen werden. Dabei kann beispielsweise ein quasi-binäres Signal, insbesondere ein Signal ausgegeben werden, das einen Zustand "gedrückt" oder "nicht-gedrückt" angibt. Unter "gedrückt" wird der Zustand verstanden, bei dem der Druck den Schwellwert überschreitet und/oder erreicht. Bei dem Zustand "nicht-gedrückt" unterschreitet der Anpressdruck den Schwellwert. Beispielsweise kann der Schwellwert variabel in seiner Höhe insbesondere stufenlos eingestellt werden. Dazu kann der Schwellwertdetektor von einem Benutzer entsprechend über ein Eingabeelement eingestellt werden. Ebenso ist ein fest eingestellter Schwellwert denkbar. Besonders vorteilhaft kann die Schwellwertdetektion in dem Sensor erfolgen bzw. der Schwellwertdetektor in dem Sensor integriert sein, so dass das Signal gedrückt/nicht-gedrückt direkt vom Sensor ausgegeben wird.

Über eine Detektion des Schwellwerts kann das Intervall, wie die Zeitdauer des Überschreitens des Schwellwertes ermittelt werden. Mit der Zeitdauer des Signals "gedrückt/nicht-gedrückt", kann die Zeitdauer bestimmt werden, die der Sensor bei Bewegung durch den Nip benötigt.

Mit der Zeit, die der Sensor für die Bewegung durch den Nip benötigt, der Drehzahl und dem radialen Abstand des Sensors zur Mittelachse des Rotationskörpers, der in etwa dem Radius des Rotationskörpers entsprechen kann, kann die Bogenlänge des Kreises ermittelt werden, auf dem sich der Sensor während des Überschreitens des Schwellwertes oder des Zustandes "gedrückt/nicht-gedrückt" bewegt. Anhand dieser Bogenlänge kann die Breite des Nips bestimmt werden. Insbesondere entspricht die Breite des Nips in etwa dieser Bogenlänge.

Die Bogenlänge kann auch anhand der Winkeldifferenz, um den der Rotationskörper vom Erreichen oder Überschreiten des Schwellwertes bis zum Unterschreiten des Schwellwertes verdreht wird, ermittelt werden. Alternativ kann die Bogenlänge mit der Zeit, die der Sensor für den Durchlauf des Nips benötigt und der Winkelgeschwindigkeit mit der der Rotationskörper gedreht wird, ermittelt werden. Ferner besteht die Möglichkeit die Breite des Nips mit einer in Umfangsrichtung des Rotationskörpers angebrachten Messeinrichtung zu ermitteln, indem das Bogenmaß direkt gemessen wird, während der Sensor den Zustand "gedrückt" detektiert. Die Bogenlänge kann auch mit der Umfangsgeschwindigkeit des Rotationskörpers, die z. B. durch Ableitung der direkt gemessenen Bogenlänge erhalten werden kann, und der Zeitdauer für den Durchlauf des Sensors durch den Nip ermittelt werden. Die direkte Messung der Bogenlänge kann an einem Durchmesser erfolgen, der größer, kleiner oder vorzugsweise gleich dem Durchmesser des Rotationskörpers ist. Falls die Messung nicht am gleichen Durchmesser wie der Rotationskörper erfolgt kann das tatsächliche Maß der Bogenlänge mit dem Radius des Messdurchmessers und dem gemessenen Bogenmaß berechnet werden. Falls der Radius des Kreises, auf dem die Messung erfolgt und der Radius der Kreisbahn, auf der sich der Sensor bewegt, nicht den gleichen Radius aufweisen, kann vorteilhaft zur Ermittlung des Kreissegments, das der Sensor während des Zustands "gedrückt" zurücklegt, mit einer geeigneten Umrechnung des Radius des Kreises, auf dem die Messung erfolgt der Radius des Kreises, auf dem sich der Sensor bewegt, ermittelt werden.

Insbesondere ist die Umfangsgeschwindigkeit und/oder die Drehzahl dadurch ermittelbar, dass das Zeitintervall ermittelt wird, das der Umfangspunkt, an dem insbesondere der Sensor angeordnet ist, von einem Zeitpunkt bei einem Durchlauf des Nips bis zu einem Zeitpunkt bei einem weiteren, z. B. unmittelbar folgenden Durchlauf des oder eines anderen Nips benötigt. Beispielsweise kann hierfür jeweils der Anfangsschwellwert, bei dem "gedrückt" detektiert wird, oder der Endschwellwert, bei dem der Zustand "nicht-gedrückt" detektiert wird, bei jedem Durchlauf verwendet werden. Insbesondere kann die Messung zwischen den Durchläufen des Nips auch zwischen den Mittelwerten der Zeiten ermittelt werden, die sich bei einem Durchlauf des Nips aus der Differenz der Zustände "gedrückt/nicht-gedrückt" ergeben. Der Vorteil hierbei ist, dass Messfehler vermieden werden, die sich aus unterschiedlichen Nip-Breiten bei einem Durchlauf ergeben können. Bei mehreren angestellten Rotationskörpern kann die Umdrehungszahl auch in Kenntnis der genauen geometrischen Anordnung der einzelnen Rotationskörper zueinander ermittelt werden. Somit kann über die Zeitdauer oder den Weg, den der Umfangspunkt von einem ersten angestellten Rotationskörper bis zu einem zweiten angestellten Rotationskörper benötigt oder zurückliegt, bestimmt werden, wenn die genaue geometrische Anordnung der beiden angestellten Rotationskörper bekannt ist. Allgemein ist es vorteilhaft, die Drehzahl zu bestimmen, wenn der oder die Rotationskörper nur leicht angestellt sind, so dass der Nip relativ schmal insbesondere linienförmig ist.

Allgemein ist es bevorzugt zur Ermittlung der Breite des Nips die das Intervall bildende Größe und eine Drehfrequenz des Rotationskörpers zu verwenden. Mit einer vorgegebenen Drehfrequenz kann der tatsächliche Radius der Kreisbahn bestimmt werden, auf der sich der Sensor bewegt.

Der Sensor kann vorzugsweise einen Temperaturfühler aufweisen. Der Temperaturfühler kann insbesondere im Sensor integriert sein. Die von dem Temperaturfühler aufgenommenen Werte können zum Beispiel zusammen mit den Werten des Drucksensors oder des Schwellwertdetektors ausgelesen werden. Die Temperatur des Rotationskörpers wird insbesondere dazu verwendet, die Walzeneigenschaften mit dem Wärmeausdehnungskoeffizient als Funktion der Walzentemperatur zu berücksichtigen.

Eine vorteilhafte Anordnung zur Messung der Nip-Breite kann insbesondere einen Sensor, der an einer Umfangsfläche des Rotationskörpers oder des Zylinders angeordnet ist, eine Zähleinheit, die wenigstens einen fortschreitenden Wert ausgeben kann, eine Verarbeitungseinheit, an die Sensor und Zähleinheit gekoppelt sind, umfassen, wobei die Verarbeitungseinheit anhand eines von dem Sensor ausgegebenen Werts eine Grenze eines Intervalls aus dem fortschreitenden Wert bilden kann. Der fortschreitende Wert kann zum Beispiel eine Zeit, ein zur Umfangsrichtung proportionaler oder äquivalenter Weg oder ein Drehwinkel des Rotationskörpers sein. Zur Übertragung des Signals von dem Rotationskörper zu einer Verarbeitungseinheit, insbesondere einer übergeordneten Verarbeitungseinheit einer Druckmaschine können an dem Rotationskörper und an dem Maschinengestell jeweils Elemente eines Schleifkontaktes vorgesehen sein, wobei die Elemente so zusammenwirken, dass das von dem auf dem Rotationskörper befindlichen Sensor ausgegebene Signal oder ein davon abgeleitetes Signal über die Elemente des Schleifkontaktes an eine sich nicht auf dem Rotationskörper befindliche Arbeitseinheit übertragen werden kann.

Vorzugsweise werden die von dem Sensor ausgegebenen Signale oder von diesen Signalen abgeleitete Signale für die Ermittlung der Breite des Nips oder mit der ermittelten Breite des Nips drahtlos von dem Rotationskörper übertragen. Dazu kann der Sensor mit einer vorzugsweise sich auf dem Rotationskörper befindlichen Sendeeinheit gekoppelt sein, welche die vom Sensor abgegebenen Werte an eine Empfangseinheit drahtlos übertragen kann. Die Empfangseinheit kann zum Beispiel auf einem anderen Rotationskörper oder vorzugsweise an einem Ort, der nicht rotiert, wie zum Beispiel dem Maschinengestell angeordnet sein. Sitzt die Empfangseinheit auf einem anderen Rotationskörper, kann beispielsweise das von dem ersten Rotationskörper auf den anderen Rotationskörper übertragene Signal in einer Verarbeitungseinheit des anderen Rotationskörpers verarbeitet werden. Das weiterverarbeitete Signal kann beispielsweise wieder von einem Sender zu einem Empfänger abgegeben werden. Der Sender und/oder ggf. der Empfänger können mit dem Sensor verbunden oder insbesondere auf dem Sensor integriert, wie zum Beispiel in die Sensorschaltung integriert sein.

Bei dem Sensor kann es sich zum Beispiel um Sensoren handeln, die sich selbst mit einer Spannung versorgen. Ein solcher Sensor ist zum Beispiel ein Piezoelement.

Der Sensor kann beispielsweise ein Sensor sein, der zur Messung des Anpressdrucks eine von außen zugeführte Energie benötigt. Diese Energie kann zum Beispiel über Batterien, Kondensatoren oder Akkumulatoren dem Sensor zugeführt werden. Vorzugsweise wird die Energie dem Sensor induktiv, wie zum Beispiel durch ein elektromagnetisches Feld oder durch ein magnetisches Feld zugeführt. Dazu kann das das elektromagnetische Feld oder das magnetische Feld bildende Element relativ zu dem Maschinengestell feststehend in der Nähe, vorzugsweise in unmittelbarer Nähe des Rotationskörpers angeordnet sein. Das Energiefeld kann den Rotationskörper zumindest teilweise, vorzugsweise vollständig in Umfangsrichtung umgeben. Wenn sich der Sensor in dem Energiefeld befindet oder bewegt, wird er mit der entsprechenden Spannung versorgt, so dass der Anpressdruck im Nip ermittelt und zum Beispiel weiter verarbeitet und oder drahtlos, insbesondere über Funk übermittelt werden kann. Besonders bevorzugt wird, dass der oder die Sensoren oder Messvorrichtungen Informationen und den Energiebedarf in Form von elektromagnetischer und/oder magnetischer Energie beziehen und/oder abgeben können. Drucksensoren, die zur Ermittlung des Anpressdrucks im Nip eine Betriebsspannung benötigen, können zum Beispiel piezoresistive Drucksensoren, frequenzanaloge Drucksensoren, Drucksensoren mit einem Hallelement, kapazitive Drucksensoren oder monolithische Drucksensoren sein. Insbesondere ist die Verwendung von Dehnungsmessstreifen vorteilhaft.

Es kann vorteilhaft sein, einen Sensor, der eine von außen zugeführte Energie benötigt, mit einem Piezoelement zu kombinieren, wobei das Piezoelement den Sensor mit Spannung versorgt. Dazu kann das Piezoelement in Drehrichtung des Rotationskörpers vor dem Sensor angeordnet sein. Vorteilhaft sind Piezoelement, Sensor und ein Kondensator parallel geschaltet. Zwischen Kondensator und Piezoelement kann eine Diode angeordnet sein, um ein Entladen des Kondensators durch das Piezoelement zu vermeiden. Für die Anordnung des Sensors und des Piezoelements gilt das Gleiche, wie für den im Übrigen beschriebenen Sensor.

Im Folgenden werden vorteilhafte Ausgestaltungen der Erfindung anhand von Figuren beschrieben. Die dabei offenkundig werdenden Merkmale bilden je einzeln oder in Kombination die Erfindung vorteilhaft weiter. Es zeigen:
- Fig. 1: eine Querschnittsansicht eines zylindrischen Rotationskörpers an den zwei weitere Rotationskörper angestellt sind,
- Fig. 2: eine Prinzipskizze des Verlauf des Anpressdrucks zwischen den Rotationskörpern,
- Fig. 3: eine Prinzipskizze eines beispielhaften Ausgabesignals,
- Fig. 4: verschiedene Anordnungsmöglichkeiten eines Sensors an einem Belag für einen Rotationskörper,
- Fig. 5: verschiedene Anordnungsmöglichkeiten eines Sensors an der Mantelfläche eines Rotationskörpers und
- Fig. 6: eine Schaltung, bei der ein Sensor mit einer von außen zugeführten Spannung versorgt wird.

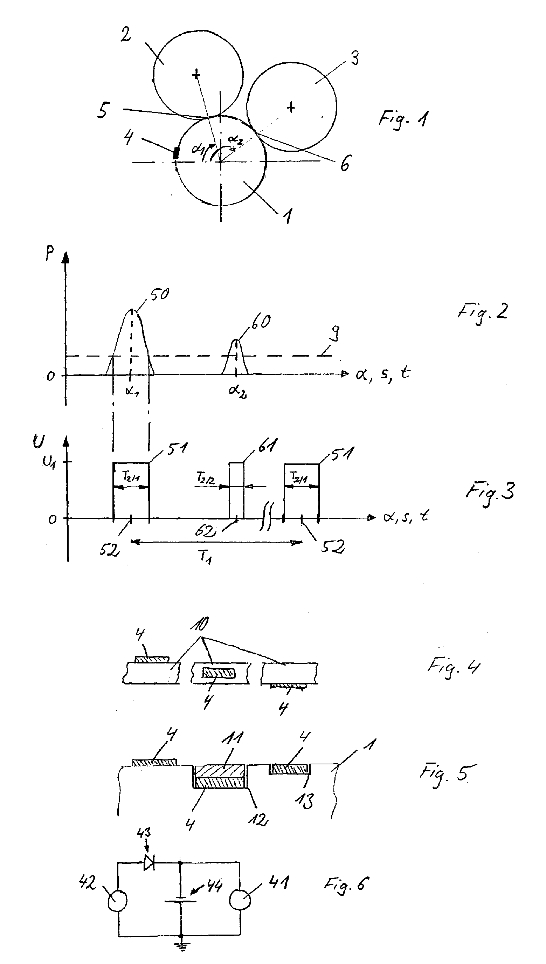

An den in Fig. 1 gezeigten Rotationskörper 1 sind zwei Rotationskörper 2, 3 mit ihren Mantelflächen an dessen Mantelfläche angestellt. Die bei den im wesentlichen zylindrischen Rotationskörpern 1, 2, 3 sich aus mathematischer Sicht ergebende Berührlinie zwischen den Rotationskörpern 1, 2 und 1, 3 wird zu einem Streifen, der eine sich in etwa Umfangsrichtung der Rotationskörper erstreckende Breite aufweist, wenn die Walzen mit einer bestimmten Kraft aufeinander gedrückt werden. Die Streifenbreite wird im Allgemeinen als Nip bezeichnet und ergibt sich aufgrund der Elastizität, welche die Rotationskörper 1, 2, 3 insbesondere an deren Oberflächen aufweisen. Die Kraft, mit der die Rotationskörper aufeinander gedrückt werden, kann mit Stellgliedern variiert werden, mit denen die Rotationskörper 2, 3 verfahren und aufeinander gedrückt werden können.

An der Umfangsfläche des Rotationskörpers 1 ist, wie zum Beispiel in den Figuren 4 und 5 dargestellt wird, ein Sensor 4 angeordnet. In Figur 4 wird ein Überzug 10 gezeigt, der über den Umfang des Rotationskörpers 1 zumindest teilweise vorzugsweise vollständig angeordnet ist oder werden kann. Der Überzug ist vorzugsweise ein Gummituch für einen Gummituchzylinder.

An dem Überzug 10 ist ein Sensor 4 angeordnet. Der Sensor kann, wie gezeigt, an der vom Rotationskörper wegweisenden Oberfläche oder der zum Rotationskörper hinweisenden Oberfläche angeordnet sein. Der Sensor 4 kann auch in den Überzug eingearbeitet, insbesondere einvulkanisiert oder eingegossen sein.

Bei dem in Figur 5 gezeigten Rotationskörper 1, der der Einfachheit halber mit einer gegen Null gehenden Krümmung gezeigt wird, kann der Sensor 4 auf der Oberfläche angeordnet, insbesondere angeklebt sein. Der Sensor 4 kann sich in einer Nut 13 befinden. Die Höhe des Sensors 4 kann so bemessen sein, dass sich dessen vom Mittelpunkt des Rotationskörpers 1 wegweisende Oberfläche oberhalb oder unterhalb der Mantelfläche des Zylinders 1 befindet oder insbesondere bündig mit der Mantelfläche abschließt. Wie ferner gezeigt wird, kann der Sensor 4 in einer Nut 12 angeordnet sein, wobei ein Abdeckelement 11 an der von der Mittelachse des Rotationskörpers 1 wegweisenden Seite des Sensors 4 angeordnet ist. Das Abdeckelement 11 ist in der Nut entlang der Höhe der Nut 12 bewegbar geführt, so dass eine auf das Abdeckelement 11 ausgeübte Druckkraft auf den Sensor 4 übertragen wird. Das Abdeckelement 11 kann vorzugsweise in etwa bündig mit der Mantelfläche des Rotationskörpers 1 abschließen oder sich etwas über oder unter dem Niveau der Mantelfläche befinden.

Zurückkehrend zu Figur 1 wird der Sensor 4 bei einer Umdrehung des Rotationskörpers 1 zuerst durch den Nip 5 und anschließend durch den Nip 6 bewegt. In Figur 2 wird der Druckverlauf während des Durchlaufs des Sensors 4 durch den Nip 5 mit der Kurve 50 und durch den Nip 6 mit der Kurve 60 skizziert. Die Kurve 50 weist einen größeren Maximalwert als die Kurve 60 auf, da der Rotationskörper 2 in diesem Beispiel mit einer stärkeren Anpresskraft auf den Rotationskörper 1 gedrückt wird als der Rotationskörper 3. An der Abszisse des Koordinatensystems in Pfeilrichtung gehend steigt der Druck vom Wert Null, wenn der Sensor in den Nip einläuft bis zu dem Maximalwert, wenn der Sensor 4 die Verbindungslinie zwischen den Mittelpunkten der Walzen erreicht hat und fällt wieder bis auf Null ab, wenn der Sensor 4 aus dem Nip 5 ausgetreten ist. Entsprechendes gilt für die Kurve 60. Anhand einer Zeitdifferenz, einer Drehwinkeldifferenz oder einer Bogenlängendifferenz, welche zwischen Einlauf und Auslauf des Sensors 4 aus dem Nip 5 ermittelt wird, kann auf die Nip-Breite geschlossen werden. Insbesondere kann hierfür die Elastizität oder die Materialhärte an der Oberfläche der angestellten Rotationskörper herangezogen werden.

Da auf den Sensor 4 z. B. minimale Störgrößen wirken können, ist es vorteilhaft, einen Schwellwert 9 parallel zur Abszisse zu definieren, dessen Schnittpunkte mit der Kurve 50, 60 des Druckverlaufs die Grenzen des Intervalls für die Zeitdifferenz, die Drehwinkeldifferenz oder die Kreisbogendifferenz angibt. Der Schwellwert 9 kann deutlich über dem Druck p = 0 liegen oder gegen den Druck p = 0 verschoben werden oder gleich dem Druck p = 0 sein.

Der Sensor 4 kann die in Figur 2 gezeigten Druckverläufe 50, 60 aufnehmen und ein dazu proportionales, insbesondere analoges Signal ausgeben. Aus diesem Signal kann in einer entsprechenden Verarbeitungseinheit das Intervall aus einem Drehwinkel, einer Zeit oder einer Bogenlänge ermittelt werden. Prinzipiell kann dies auch in dem Sensor erfolgen.

Nach der Umwandlung wird ein quasi-digitales Signal ausgegeben, wie zum Beispiel in Figur 3 dargestellt wird, das einen Zustand "gedrückt/nicht-gedrückt" des Sensors 4 ausgibt. Wie hierin gezeigt wird die Durchlaufzeit T_{2/1} des Sensors von dem Über- bis zum Unterschreiten des Schwellwertes 9 ermittelt. Daraus ergibt sich das Signal 51, das bei einem gedrückten Zustand des Sensors 4 durch eine konstante Spannung charakterisiert ist. Gleiches gilt für das Signal 61 entsprechend mit der Durchlaufzeit T_{2/2}. Die Zeit T₁ gibt an, welches Zeitintervall zwischen dem Durchlauf des Sensors 4 durch den Nip 5 und einen weiteren Durchlauf des Sensors 4 durch den Nip 5 liegt. Diese Zeit kann beispielsweise durch die Mittelwerte 52 der Intervalle T_{2/1} erfolgen. Die Zeit T₁ entspricht der Umlaufzeit des Rotationskörpers. Die Umlaufzeiten T_{2/1} und T₁ sind stellvertretend für Winkelintervalle oder Bogenlängenintervalle.

Durch die Detektion des Zustands des Sensors zwischen "gedrückt" und "nicht-gedrückt" und durch eine Vorgabe einer bestimmten Drehzahl der Rotationskörper ist es möglich den zeitlichen Verlauf der Nipdurchläufe zu bestimmen und dadurch die Nip-Breite zu ermitteln. Die Drehzahl f des Rotationskörpers 1 kann beispielsweise durch die Zeit T₁ ermittelt werden, da gilt f = 1/T₁.

Aus der Umlaufzeit T₁ lässt sich auch der Walzendurchmesser bestimmten. Für kleine Nip-Breiten, wovon in der Regel auszugehen ist, gilt: R1 = 2 π R / ω T₁, wobei
- R1: der Radius des Rotationskörpers,
- R: der Nennradius des Rotationskörpers 1 und
- ω: die Vorgabedrehwinkelgeschwindigkeit des Rotationskörpers 1 ist.

Für die Nip-Breite ergibt sich allgemein folgende Beziehung: Nip-Breite = f(T_{2/1}, T₁).

Figur 6 zeigt eine Schaltung mit einem Sensor 41, der mit einer von einem Piezoelement 42 erzeugten elektrischen Energie versorgt wird. Das Piezoelement 42 wird beim Durchlauf durch den Nip gedrückt, wodurch eine elektrische Spannung bzw. Energie erzeugt wird. Mittels der elektrischen Energie kann der Sensor 41 versorgt werden, damit dieser den Anpressdruck der Rotationskörper im Nip ermitteln kann. Um den Spannungspeak, den das Piezoelement 42 beim Durchlauf durch den Nip liefert, zu glätten, ist dem Piezoelement 42 und dem Sensor 41 ein Kondensator 44 parallel geschaltet. Ein Entladen des Kondensators 44, für den Fall, dass das Piezoelement 42 als Verbraucher wirkt, wird durch eine Diode 43 verhindert. Die Diode 43 ist in Reihe mit dem Piezoelement 42 und der Parallelschaltung aus Sensor 41 und Kondensator 44 geschaltet.

## Patentansprüche

1. Verfahren zur Ermittlung einer zwischen zwei Rotationskörpern gebildeten Nipbreite bei Rotationsdruckmaschinen, wobei die sich in Umfangsrichtung erstreckende Breite des Nips während eines Durchlaufs eines Umfangspunkts durch den Nip ermittelt wird.

2. Verfahren nach Anspruch 1, wobei ein Zeitintervall, ein Wegintervall oder ein Drehwinkelintervall ermittelt wird, während der Umfangspunkt eines der zwei Rotationskörper den Nip durchläuft.

3. Verfahren nach dem vorhergehenden Anspruch, wobei Grenzen des Intervalls in Abhängigkeit eines Anpressdrucks ermittelt werden, den die den Nip bildenden Rotationskörper aufeinander ausüben.

4. Verfahren nach dem vorhergehenden Anspruch, wobei die Grenzen des Intervalls bestimmt werden von einem Ereignis bei dem der Anpressdruck einen Schwellwert erreicht oder überschreitet bis zu einem Ereignis bei dem der Anpressdruck den Schwellwert unterschreitet.

5. Verfahren nach einem der zwei vorhergehenden Ansprüche, wobei der Anpressdruck mit einem Drucksensor ermittelt wird, der ein vom Anpressdruck abhängiges Signal ausgibt.

6. Verfahren nach einem der vier vorhergehenden Ansprüche, wobei eine Drehfrequenz eines der Rotationskörper anhand eines Zeitintervalls ermittelt wird, das der Umfangspunkt von einem Zeitpunkt bei einem Durchlauf des Nips bis zu einem Zeitpunkt bei einem weiteren Durchlauf des Nips benötigt.

7. Verfahren nach einem der fünf vorhergehenden Ansprüche, wobei zur Ermittlung der Breite des Nips, die das Intervall bildende Größe und eine Drehfrequenz eines der Rotationskörper verwendet werden.

8. Verfahren nach einem der sechs vorhergehenden Ansprüche, wobei mit einer vorgegebenen Drehfrequenz ein tatsächlicher Durchmesser eines der Rotationskörper bestimmt wird.

9. Verfahren nach einem der sieben vorhergehenden Ansprüche, wobei eine sich in Umfangsrichtung erstreckende Breite eines zwischen dem Rotationskörper und wenigstens einem weiteren Rotationskörper gebildeten Nips ermittelt wird.

10. Verfahren nach einem der vorhergehenden Ansprüche, wobei wenigstens ein Signal für die Ermittlung der Breite des Nips oder mit der ermittelten Breite des Nips drahtlos von dem Rotationskörper übertragen wird.

11. Anordnung zur Ermittlung einer sich in Umfangsrichtung erstreckenden Breite eines zwischen zwei Rotationskörpern gebildeten Nips, umfassend:
a) einen Sensor, der an einer Umfangsfläche eines der Rotationskörper angeordnet ist,
b) eine Zähleinheit, die wenigstens einen fortschreitenden Wert ausgeben kann,
c) eine Verarbeitungseinheit, an die der Sensor und die Zähleinheit gekoppelt sind,
d) wobei die Verarbeitungseinheit anhand eines von dem Sensor ausgegebenen Werts eine Grenze eines Intervalls aus dem fortschreitenden Wert bilden kann.

12. Anordnung nach dem vorhergehenden Anspruch, wobei der fortschreitende Wert eine Zeit, ein zur Umfangsrichtung äquivalenter Weg oder ein Drehwinkel der Walze ist.

13. Anordnung nach einem der zwei vorhergehenden Ansprüche, wobei der Sensor auf der Oberfläche oder unterhalb der Oberfläche einer Walze oder eines Zylinders insbesondere eines Formzylinders oder Übertragungszylinders angeordnet ist.

14. Anordnung nach einem der drei vorhergehenden Ansprüche, wobei der Sensor auf oder im oder unter einem Gummituch für einen Zylinder oder einem Walzenbelag angeordnet ist.

15. Anordnung nach einem der vier vorhergehenden Ansprüche, wobei der Sensor auf oder unter einer Oberfläche einer Druckplatte oder eines Formzylinders angeordnet ist.

16. Anordnung nach einem der fünf vorhergehenden Ansprüche, wobei der Sensor neben einem Satzspiegel oder in einem druckfreien Bereich oder innerhalb des Satzspiegels angeordnet ist.

17. Anordnung nach einem der sechs vorhergehenden Ansprüche, wobei der Sensor aufgeklebt oder eingebettet ist.

18. Anordnung nach einem der sieben vorhergehenden Ansprüche, wobei der Sensor mit einer Sendeeinheit gekoppelt ist, die von dem Sensor ausgebbare Werte an eine Empfangseinheit drahtlos übertragen kann.

19. Anordnung nach einem der acht vorhergehenden Ansprüche, wobei der Sensor ein Dehnungsmessstreifen oder ein Piezoelement ist.

20. Anordnung nach einem der Ansprüche 11 bis 18, wobei der Sensor 41 mit einem Piezoelement 42 verbunden ist, so dass der Sensor 41 von dem Piezoelement 42 mit einer elektrischen Energie versorgt werden kann.

21. Anordnung nach dem vorhergehenden Anspruch, wobei der Sensor 41 mit einem Kondensator 44 parallel geschaltet ist und wobei diese Parallelschaltung mit einer Diode 43 und dem Piezoelement 42 in Reihe geschaltet ist.
